Europäisches Patentamt

European Patent Office

Office européen des brevets

(19)

(11) Publication number: **0 229 232**
**A2**

(12) **EUROPEAN PATENT APPLICATION**

(21) Application number: **86114020.0**

(22) Date of filing: **09.10.86**

(51) Int. Cl.³: **G 06 F 15/40**

(30) Priority: **31.12.85 US 815430**

(43) Date of publication of application:
**22.07.87 Bulletin 87/30**

(84) Designated Contracting States:
**DE FR GB IT SE**

(71) Applicant: **TEKTRONIX, INC.**
**Tektronix Industrial Park D/S Y3-121 4900 S.W. Griffith Drive P.O. Box 500**
**Beaverton Oregon 97077(US)**

(72) Inventor: **Schwartz, Mayer D.**
**4160 S.W. 195th Court**
**Aloha Oregon 97007(US)**

(72) Inventor: **Delisle, Norman M.**
**2915 S. W. Hume Street**
**Portland Oregon 97219(US)**

(74) Representative: **Liesegang, Roland, Dr.-Ing.**
**Sckellstrasse 1**
**D-8000 München 80(DE)**

(54) File management system.

(57) A file management system comprises a computerized data storage and retrieval utility for integrating data files produced by independent data processing operations by linking the data files according to user-definable relationships. The machine includes means for assigning user-definable attributes (82) to the data files and their links and for identifying groups of files and links having selected attributes. The machine also maintains an archive (64) of versions of data files and their links referenced according to their creation time. The machine includes provisions for transmitting commands to a computer operating system when selected files are accessed or modified to invoke execution of user created programs.

FIG. 2

EP 0 229 232 A2

## FILE MANAGEMENT SYSTEM

### Background of the Invention

The present invention relates to computerized data storage and retrieval systems and in particular to a system for linking separate data files according to user-definable relationships.

Typically one of the most difficult aspects of large engineering or similar projects is record keeping. For instance in the design and construction of a nuclear plant, massive numbers of documents are generated, including preliminary studies, drawings, specifications, letters, reports and the like. These documents must be stored in a logical fashion so that they can be retrieved when needed. When the number of such documents becomes very large it is often difficult to find them once they are stored, particularly when only the nature of a document to be retrieved, and not a name or a reference number under which it is filed, is known.

In addition to problems associated with storing and retrieving documents, there are also considerations associated with the "ripple" effect that changing one project document may have on other project documents. For instance if a design drawing is changed, other drawings of a specification which relate to the drawing might also have to be altered. For a very complex project it is not easy to determine the other documents affected. Also it is often important to keep records of document changes, including not only prior versions of a document but in addition records as to why a document was changed and who changed it.

The use of computerized data base systems is well known. Data base systems permit documents to be characterized according to various attributes of the document such as "author", "document type", "subject matter", etc. For instance, to characterize a specification for a pump written by Smith, a user may assign character strings "Smith", "specification", and "pump" as the values of author, document type and subject matter attributes. Such data base systems typically include search routines for locating documents identified by assigned attribute values matching a list of selected attribute values provided by a user, thereby enabling a user to easily locate all documents sharing a common set of attributes such as all pump specifications written by Smith.

More recently, the advent of rapid access bulk data storage devices and multiple computer networks has permitted computer systems to actually create and electronically store the documents as files in a bulk storage device in addition to keeping track of documents. To be effective for use in storing and retrieving documents associated with a large project, such file management systems should be capable not only of locating groups of files containing documents having common attributes, but also of finding groups of files which are related to a given file in some definable way. For instance, once a user has located a particular file containing Smith's pump specification, he may then wish to locate other files which contain reviewer's comments regarding the pump specification or which may contain pump drawings related to the pump specification. There is continuing activity in the area of computerized data storage and retrieval systems pertaining to "hypertext" systems which enable users to establish "links" between file pairs indicating that two files are related in some way. (The article "Reading and Writing the Electronic Book", by Nicole Yankelovich and Norman Meyrowitz, pages 15-30 in the October, 1985 issue of Computer, published by the Institute of Electrical and Electronic Engineers, is a good summary of prior art relating to systems of this type and is incorporated herein by reference.) A "link" can be visualized as a pointer from a first file to a second file indicating the second file is related to the first file. A link is implemented as a stored record containing data identifying the linked first and second files and containing link attribute data defining the nature of the relationship between the two files. For instance, when the first file is a specification and the second file is a comment regarding the specification, a link record may be created which identifies the first and second files and which contains link attribute data indicating that the relationship between the files is one of "comment". A separate link record is provided for every pair of linked files. If three comments have been written about a particular specification and stored in separate files, three links records may be created, each indicating a "comment" relationship between the specification file and a corresponding one of the comment files. Link records may be grouped according to the files they link so that once a particular file is identified, such as the specification file, all other files, such as the comment files, to which the particular file is linked, can be quickly determined by reviewing only the link records associated with the particular file.

Files and links between files both may have assigned attributes characterizing the nature of the file or link, but the concept of a file attribute, as known in the art, differs somewhat from the concept of a link attribute. Although separate files may be related by file attributes, the relationship between such files is one of commonality and is non-directed in that the relationship does not involve a pointing from one file to another file. For instance, all files created by Smith are related by virtue of having a common author and this common feature of each such file may be denoted by using "Smith" as the value of an "author" file attribute for each file. In contrast, links describe relationships between pairs of files in a directed fashion, in the sense that a link leads a user "from" a first document "to" another document for a particular reason, the link attribute being descriptive of that reason. Thus the relationship indicated by a link attribute is not one of commonality but is rather one of "connectivity". For instance, the relationship between a first file containing a drawing and a second file containing a comment about the drawing cannot be easily described in terms of what both files have in common (i.e., by a file attribute) since the files differ; one file is a "drawing" and the other file is a "comment". But if the concept of "comment" is used to describe a link between the two files, rather than to describe the nature of one of the files, the relationship between the files is clearly specified.

Even though a file may be thought of as containing a "comment", and therefore may be assigned a file attribute value "comment", it is not particularly useful to do so since users are typically not interested in finding the group of all files which contain comments. Instead, users are usually more interested in finding files containing comments about a particular user-identified file. It is therefore much more useful to establish a link between two files where the link has a "comment" attribute.

Links give a collection of files structure by connecting file pairs to form a "web" or a "graph" wherein each file may be thought of as a "node" interconnected to other nodes by links. Some systems of the prior art are adapted to display a representation of the graph enabling a user to visualize how sets of files are interrelated in much the same way that a map depicts how towns are interconnected by roads or rivers. Thus, for instance, when a user decides to change one file ("node"), he may quickly determine all of the other files which might be affected by the change by inspecting other nodes which are linked to the node to be changed.

However, if the number of files associated with a project is large, the graphs become complex, difficult to display and difficult for a user to utilize. Therefore systems typically enable a user to reduce the size of a graph to be displayed by specifying to the system the attributes of various files of interest. The system then displays a "subgraph" which contains only nodes characterized by the special attributes. For instance when a user is only interested in files relating to pumps, the system displays the nodes representing pump-related files along with their interconnecting links, thereby reducing the number of files the user might have to inspect in order to find a particular file of interest.

While prior art systems help a user to organize and retrieve stored data, these systems still leave certain record keeping problems unresolved. One problem relates to the difficulty of preselecting the types of file or link attributes which may be most advantageous. In order for a system to be useful, the attributes and their values which a user can use to describe files and links must provide an appropriate basis for searches to be performed by the system. However, only a limited number of attributes is usually contemplated.

Hypertext systems also would be more useful if they included provisions for maintaining comprehensive records of how project documentation changes with time. Some computerized data storage systems store old versions of a document but for large projects documents often undergo so many revisions that it becomes impractical or impossible to store every version of every document. It would also be desirable to maintain a history of changes to file and link attributes. For instance a file attribute may indicate the name of a person responsible for approving changes to that document, and when another person assumes that responsibility the corresponding attribute value must be changed. But in doing so the identity of the person previously responsible for approving changes is lost unless some means can be provided for maintaining the information. An ideal system would be able to recreate the entire graph of a system as it existed at any previous time, including the contents of files at the time, the file attributes assigned to the files, the links between the files existing at the time and the link attributes existing at the time. This feature would be very useful in determining the cause of problems that arise in the course of a project but implementation thereof is generally impractical in prior art systems.

Another problem associated with the use of multi-user systems occurs when two people independently attempt to change the same file at the same time. A conflict arises as to which new version should be considered the latest version. Some systems prevent the conflict by blocking access to a file by more than one person at a time, but this approach inefficiently utilizes multiple user capability, particularly when one user wants only to read the file rather than change it.

Finally, it would be desirable to provide a data storage and retrieval system capable of notifying a user when another user attempts to access or change a file, a link, or other features of a graph. Such capability would facilitate informing interested parties when a file or other aspect of a graph has been, or is about to be, changed.

## Summary of the Invention

According to one aspect of the present invention, a data file management machine enables a user to characterize stored data files ("nodes") according to user-definable "file attributes". (Hereinafter the terms "file" and "node" will be used interchangeably.) Each file attribute is a variable having a user-defined name such as "author", or "subject matter", and a user may assign a value to the file attribute for each file. The values that may be assigned to a file attribute may comprise user-defined character strings, such as "Smith" or "pump specification", or may be an integer. The machine stores data representing file attributes and their values in a set of "node records", each node record comprising a collection of data associated with a file.

Since the file attributes are user-definable, the user can establish a new attribute whenever he recognizes a new distinguishing feature about a file. For instance, new text files may be created which are written in different languages than previously stored files, and a user may wish to classify the new files according to the language in which they are written. The present invention enables the user to establish a new file attribute named with the character string "language". He may then assign the character string "French" as the value of the language attribute for every file written in French and he may assign the character string "English" as the value of language attribute for every file written in English. Thus unlike data management systems of the prior art, the present invention enables a user to establish a new file attribute whenever the need arises and the user is not limited to selecting from among a fixed number of predefined attributes.

The data file management machine of the present invention further enables a user to establish "links" between related file pairs. A "link" is a user-defined relationship between two files, the link being evidenced by a stored "link record", a collection of data including references to the two files being linked and including data describing "link attributes" and their assigned values. A "link attribute" is a variable comprising a user-defined character string as a name. The user can also assign an attribute value to the variable to characterize a relationship between two files. This attribute value may also be a user-defined character string or may be an integer. As an example of the utilization of links, when a first file contains a drawing for a pump, a second file contains a specification for the pump shown in the drawing, and a third file contains comments regarding the drawing, a user may define two links, a first linking the first and second files and a second linking the first and third files. Each link may be characterized by a link attribute which the user may, for instance, name "reference". For the link relating the drawing file to the specification file, the user may assign a value to the "reference" link attribute which the user calls "specification". For the link relating the drawing file to the designer comments file, the user may assign the character string "comment" as the value of the "reference" link attribute. The machine of the present invention creates the appropriate link records based on the user's input regarding the files to be linked and the names and values of the link attributes.

The present invention enables a user to define not only the values of file and link attributes but also to create new links between files based on new, user-defined link attributes. In systems of the prior art which permit the use of file and link attributes, the number and names of file and link attributes are fixed and the user can only change values of limited file and link attributes already associated with particular files and links. The user cannot undertake to establish new file or link attributes.

The machine of the present invention is also adapted to locate all files and links characterized by user selected combinations of file and link attribute values. The machine finds the appropriate files and links by searching through the node and link records. The ability of a user to define new link and file attributes provides the user with more flexible control over file and link selection than is possible when the number and nature of assignable file and link attributes are predetermined and fixed.

According to another aspect of the invention, the machine is adapted to perform a "traversal" search whereby a user provides the machine with the identification of a first node along with a predicate for the files and a predicate for the links which describe the set of attributes and their values which are desired. The machine then identifies all nodes connected to the first node through intermediate nodes and links, wherein the intermediate nodes and links are all characterized by the selected node or link attribute values. This traversal search is useful when links are employed to indicate a progression of files, as for instance when each section of a specification is separately stored and wherein links having "next section" attributes connect each successive section. Thus a user need only identify the first section, and provide the machine with a "specification" file attribute value and a "next section" link attribute value. The machine will then find every section of the specification and identify them to the user in the order they occur.

Hypertext systems of the prior art perform "query" searches wherein the user provides a list of selected file and link attribute values but does not provide a starting node. The system then identifies all files characterized by the selected file attribute values and all links characterized by the selected link attribute values which interconnect the identified files. However, the traversal search of the present invention always identifies the files in the proper order whereas the query search returns files in arbitrary order. Moreover, for a query search to be adequately selective, the file attributes must usually be more precisely defined than for the traversal search. For instance, if more than one specification is stored in the system, additional file attribute values may be necessary to distinguish between files associated with different specifications. Otherwise the query search would return all specification files and not just the desired specification file. A traversal search can be much faster than the query search because in a query search every node record and every link record is inspected whereas in a traversal search only those node and link records are inspected which are encountered in the course of the search by passing through ("traversing") intermediate nodes and links having the selected attribute values.

According to still another aspect of the invention, the machine is adapted to transmit user-definable character strings ("demons") to a computer operating system within which the machine functions. A demon is transmitted on occurrence of any one of a set of events affecting a graph, such as a user request to modify a file, delete a link, or change a file or link attribute value. The demon character strings can be chosen so that the operating system identifies them as commands, such as commands to run a program. Demons are useful, for instance, to initiate a user-provided program which sends a message over an electronic mail system to a person responsible for approving changes to a file. The machine of the present invention can be instructed to transmit the demon whenever someone attempts to modify the contents of the file, thereby initiating a warning message to the responsible person.

According to a further aspect of the invention, the machine identifies a node according to the time (the "version time") the node was created. When the machine modifies a node in response to user input, the version time identifying the node is updated to the current time. When a user attempts to change the contents of a node, the user indicates the version time of the node he wishes to change, and if the version time indicated by the user is not the current version time for the node, then the machine knows that the user's changes are based on an outdated version of the node. That is, the contents of the node have been changed since the last time the user acquired them. In such case the machine prevents the user from modifying the node and notifies the user of the problem. This aspect of the invention prevents conflicts which can arise when more than one user independently access and attempt to modify a node at the same time.

According to a still further aspect of the invention, the machine is adapted to determine the states of files, links, attribute values and demons as they existed at any previous time. Whenever a user changes the contents of a file, thereby creating a new "version" of the file, the machine creates and stores a "version history" record containing a set of instructions for converting the new version back to the previous version that it replaced. The entire previous file is not stored. The new version of the file is identified by the version time, adjusted to indicate the time at which the new version was created. The version history record for the previous version is also identified by a version time indicating the time that the previous version of the file was created. When a user wishes to inspect the contents of a file as it existed at a particular time, the user indicates the particular time to the machine and the machine can determine from the version time identifiers which version of the file was the current version as of the particular time and can reconstruct that version using the version histories. The machine also assigns version times to each link, indicating when the link was created, thereby enabling the machine to determine which links existed at a given time. The machine further maintains time referenced records of previously assigned values of file and link attributes and of demons as they previously existed.

The subject matter of the present invention is particularly pointed out and distinctly claimed in the concluding portion of this specification. However, both the organization and method of operation of the invention, together with further advantages and objects thereof, may best be understood by reference to the following description taken in connection with accompanying drawings wherein like reference characters refer to like elements.

Drawings

FIG. 1 is a block diagram of an information management system utilizing the present invention;

FIG. 2 is a block diagram of computer software according to the present invention;

FIG. 3 is a diagram depicting relationships between selected data files maintained by the software of FIG. 2;

FIG. 4 is a diagram depicting additional relationships between selected data files maintained by the software of FIG. 2; and

FIG. 5 is a diagram illustrating a link between two data files.

Detailed Description

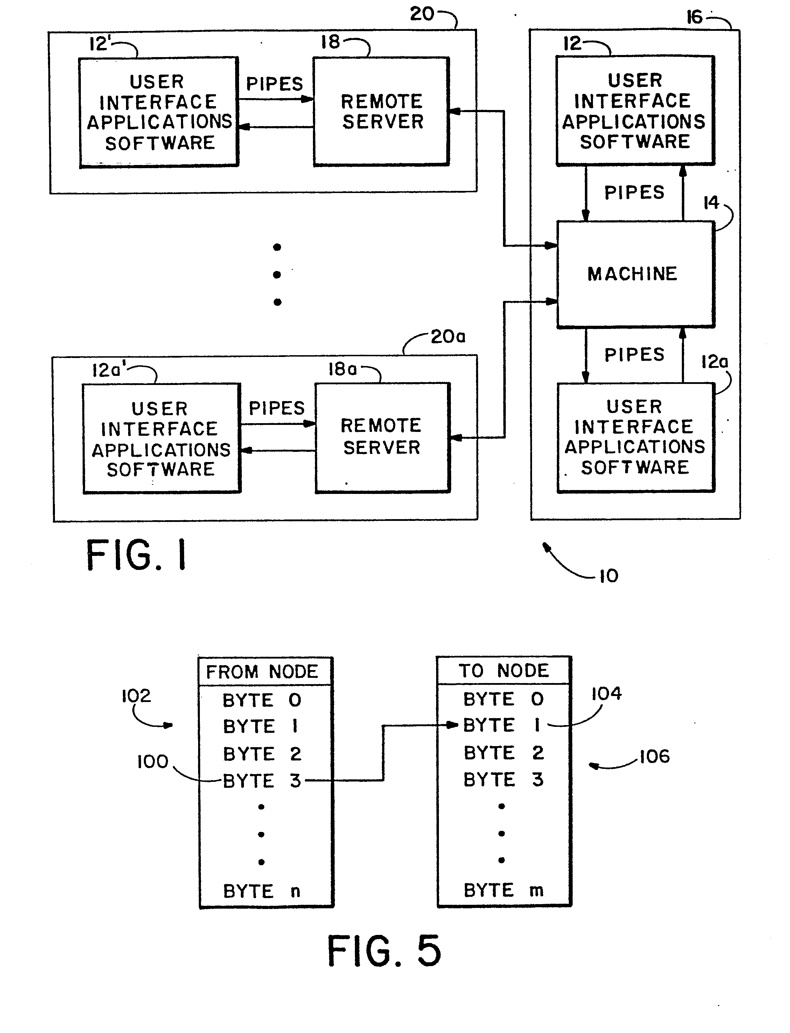

Referring to FIG. 1, there is depicted in block diagram form an information management system 10 adapted to perform selected data processing operations for multiple users. The system includes a software-based data file management machine 14 according to the present invention adapted to provide a data storage and retrieval utility that supports denotation of relationships between data within separate data files produced by system users. In the preferred embodiment of the present invention, system 10 is adapted to operate within the multiple user UNIX operating system environment. (The UNIX operating system was developed by the American Telephone and Telegraph Company and is described in the book Using the UNIX System, by Richard Gauthier, published in 1981 by the Reston Publishing Company.) Each user creates and modifies data files by means of user interface applications software running as separate UNIX processes. In the example of FIG. 1, two users may concurrently utilize separate applications software 12 and 12a running on the same computer 16 as the machine 14, accessing the machine through UNIX pipes.  (A UNIX pipe is an open file accessable by two processes such as machine 14 and application software 12 or 12a.)  Two other users may utilize applications software 12' and 12a' running on remote computers 20 and 20a which access the machine 14 through remote servers 18 and 18a.  Computers 16, 20 and 20a suitably comprise Digital Equipment Corporation VAX model computers or other computers capable of operating within the UNIX operating system environment.

User applications software 12 (and 12a) (hereinafter also called "user") may carry out any of a variety of data processing functions and may by way of example comprise word processors, computer-aided design and other graphics systems, and data base systems, each of the type producing sequences of data to be stored in files.  The data sequences from the user are transmitted to machine 14 which, working through the UNIX operating system, is responsible for controlling the storage of the data sequences as files in bulk storage media such as a disk.

The data file management machine 14 enables a user to characterize stored data files ("nodes") according to user-definable "file attributes".  A file attribute is a variable having a user-defined name such as "author", or "subject matter", and may be assigned a user-defined value characterizing each file.  The file attribute values may be user-defined character strings such as "Smith" or "pump specification" or may be user-selected integers. The user is not limited to selecting from among a fixed number of predefined file attributes in order to characterize files but can establish new file attributes and new file attribute values whenever the need arises. For instance, when a user decides to classify files according to the number of bytes of data in the file, the user may establish a new file attribute which the user chooses to name with the character string "length" and may assign an integer representing the document length as the value of the "length" attribute for each file. After the user provides machine 14 with data indicating which file is to be assigned an attribute, and the name and value of the attribute, the machine stores data indicating the file attribute and its value in a "node record" associated with the file. A node record associated with each node contains data indicating all of the file attributes and their values which have been defined by the user and assigned to the file.

The machine 14 also permits a user to establish "links" between selected pairs of related files. A "link" is a user-defined relationship between two files, the link being evidenced by data in a stored "link record". A link record is a file containing data identifying two files being linked and describing various "link attributes" and their assigned "link attribute values". A "link attribute" is a parameter having a user-definable name such as "reference" to which the user can assign a link attribute value characterizing the relationship between the identified pair of files. The attribute value is also user-defined and can be either a character string or a number. For instance, a first file may contain a drawing for a pump, a second file may contain a specification for the same pump, and a third file may contain comments regarding the drawing. The user may establish two links, one between the first and second files and another between the first and third files. Each link may be characterized by a link attribute, which the user may name "reference", the value of which more precisely describes one of a set of relationships that may exist between a file and all other files which refer to that file. For the link relating the drawing to the specification, the user may assign a value to the "reference" link attribute which he calls "specification". For the link relating the drawing to the designer comments, the user may assign the character string "comment" as the value of the reference link attribute. The machine 14 then establishes the appropriate link records including a first link record identifying the first and second files and containing data indicating "reference" as an attribute of the link and "specification" as the value of the attribute, and a second link record identifying the first and third files and containing data indicating "reference" as an attribute of the link and "comment" as the value of the attribute. It is important to note that in characterizing a link, the user is not limited to selection from among a limited set of predetermined link attributes but can define any number of new link attributes and new link attribute values whenever the need arises.

Thus the present invention enables a user not only to define new values of file and link attributes but also to create new file and link attributes. In systems of the prior art which permit the use of file and link attributes, the number and names of file and link attributes are fixed and the user can only change the values of file and link attributes associated with particular files and links; he cannot define new file or link attributes.

The use of appropriately selected link and file attributes enables a user to quickly locate files of interest when the user cannot precisely identify which files he wants to locate but does know certain characteristics of the files. The machine 14 is adapted to provide a user with a list of all files and links characterized by user-selected combinations of file and link attribute values. The machine finds the appropriate file and links by searching through the node and link records which contain the file and link attribute information. Therefore the ability of a user to define and assign new attributes to files and links when he determines that a newly recognized file or link characteristic may provide a useful search basis gives the user more control over file searches than is possible when the number and nature of assignable file and link attributes are fixed and predetermined.

The machine 14 is adapted to perform two different kinds of searches, one called a "traversal" search and the other called "query" search. To initiate a "traversal" search a user provides the machine with the identification of a first node along with a predicate for the files and a predicate for the links which describe the set of attributes and their values which are desired. The machine then searches all of the link records associated with links connecting the first node to other nodes in order to locate a set of second nodes connected to the first node by links characterized by the selected attribute values. Next the machine searches the node records of each of the second nodes to locate a subset of the second nodes wherein each node of the subset is characterized by the selected file attributes. The machine then searches through the link records associated with links connected to the second node subset to find a set of third nodes connected to the second node subset by links characterized by the selected link attribute values. The process continues until the machine identifies all nodes connected to the first node through a series of intermediate links and nodes wherein the intermediate node and links are all characterized by the selected node or link attribute values. Thus in a traversal search, the machine 14 "traverses" a graph starting with an initial node and following only those links which have the selected link attributes and passing through only those nodes having the selected file attributes, and the machine identifies to the user the nodes and links traversed in this fashion.

This traversal search is particularly useful when links indicate an ordered progression of files, as for instance when each section of a specification is stored as a separate file and links having "next section" attribute values are provided to relate each successive section. Thus a user need only identify the first section of the specification and provide the machine with a "specification" file attribute value and a "next section" link attribute value. The machine will find every section of the specification and identify them to the user in the order encountered. Since the sear.1 is performed by traversing ordered links, the order in which specification sections are encountered matches the order in which the sections occur in the specification.

The machine 14 is also adapted to perform "query" searches. For a query search, the user provides file and link predicates which describe the set of attributes and their values, but does not provide a starting node. The system then searches all of the node and link records to identify all of the files characterized by the selected file attribute values and all of the links characterized by the selected link attribute values which interconnect the identified files. One difference in result between the traversal search and the query search is that the traversal search always identifies the files in the proper order whereas the query search returns the files in arbitrary order. For a query search to be adequately selective, the file attributes must be more precisely defined than for the traversal search. In the example of the specification, if more than one specification is stored in the system, additional file attribute values must be utilized to distinguish between files associated with different specifications. This is not required for the traversal method. The traversal method can be much faster than the query method because in the query method every node record is inspected whereas in the traversal method only node records encountered during the traversal are inspected. Nonetheless, the query search is useful particularly when the user cannot identify a starting node for a traversal search.

When the user produces a new sequence of data to be filed, the user transmits the data to machine 14 and machine 14 produces UNIX commands necessary to cause the UNIX operating system to store the data in a disk or other bulk storage device as a UNIX data file. The machine 14 identifies each data file (node) by two parameters: "NodeIndex", a unique code associated with the node, and "Time", a number determined according to the date and time that the node was created. These parameters are returned to the user at the time the file is stored. Subsequently, when a user seeks to access the contents of an existing node, the user may transmit a request to machine 14 to access ("check out") the node, identifying the node by its NodeIndex and Time parameters. The machine 14 then transmits a copy of the node contents to the user. The user may modify the contents and transmit these contents back to the machine 14 for storage. When the machine changes the contents of a file, it updates the Time Parameter to reflect the time of the change rather than the time the node was initially created. The use of the Time parameter permits machine 14 to identify and resolve conflicts arising when different users attempt to modify the contents of the same node. In changing or modifying the contents of a node, the first user, when requesting machine 14 to store ("check in") the new node contents in place of the current node contents, identifies the node by supplying the Node Index and Time parameters, and if the supplied Time parameter value does not equal the Time parameter value corresponding to the current contents (current version) of the node, then machine 14 aborts the storage of the first user's version because the incorrect Time parameter supplied by the first user indicates that a second user has modified the node since the first user checked it out.

The machine 14 permits a user to declare a node to be either a "file" or an "archive" type node. The contents of an existing node are written over when a user checks in a modified version of the node contents and in a "file" type node the previous version of the node is lost. However in the case of an "archive" node, the machine 14 stores a set of instructions (a "version history") which, when followed, converts the latest version of the node to the previous version. Version histories are created and stored each time an archive node is changed and these version histories enable the machine 14 to recreate all previous versions of an archive file.

The machine 14 also identifies each link according to a LinkIndex parameter and a Time parameter. The LinkIndex parameter is a unique code identifying the link and the Time parameter is a number indicating the time that the link was created (the "version time"). A user may direct the machine to delete a link from a "graph", and if the link connects only "file" type nodes for which version histories are not maintained, the machine will respond by destroying the link record describing the link to be deleted. However if the link connects an "archive" type node, the machine 14 will not destroy the link record. Instead, the machine 14 stores an additional Time parameter in the record indicating the time that the link was deleted. Thus the machine can determine when the link "existed" from the creation and deletion Time parameters stored in the link record.

The machine also maintains records of previously assigned values of file and link attributes as they existed at any given time. These records, in conjunction with the time referenced link records and the node version histories, enable machine 14 to determine the state of files, links, and attribute values as they existed at any previous time. In fact, if every node is declared an archive type node, then the machine 14 can completely reconstruct a "graph" as it existed at any previous time.

When the user requests the machine 14 to perform a query or a traversal search, as previously described, the user may provide the machine with a specified prior time and the machine will base the query or traversal search on the graph as it existed at the user-specified time. Thus the machine 14 is not only adapted to reconstruct a graph as it previously existed, it is also adapted to perform user-directed query and traversal searches based on previous states of the graph, thereby making it easy for a user to locate previous versions of files.

The machine 14 of the present invention is also adapted to transmit user definable character strings, "demons", to the UNIX operating system when a graph or selected files or links within a graph are created, accessed, modified or destroyed. Demons typically are used to command the UNIX operating system to execute programs, and a demon invoked program might, for instance, maintain a list of all users accessing a node or might send a message through an electronic mail system to the author of a file whenever the file is accessed.

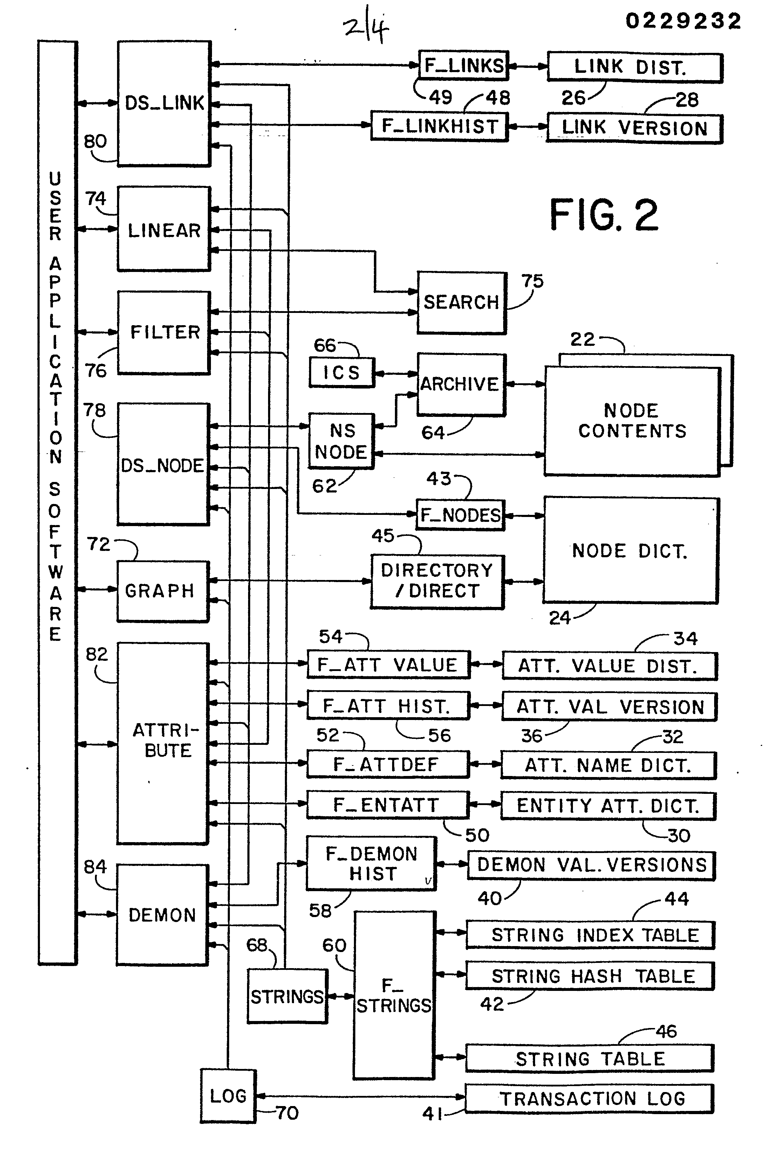

A listing of C language programs for implementing the machine 14 according to the present invention is included in Appendix I to this specification. FIG. 2 is a block diagram of the software of Appendix I wherein each block represents a program listed in Appendix I or one of several data files maintained by the programs. With reference to FIG.

0229232

2, the machine 14 maintains one node contents file 22 for each node along with a number of other files for storing information about the nodes and the links that interconnect them.

A node dictionary 24 is a file containing a set of entries ("node records") each entry containing a record of information about a node. There is one such node dictionary 24 entry for every node. Each node dictionary 24 entry comprises the following parameters:

lastUpdateTime:
The value of this parameter indicates the version time for the next most recent version of the node corresponding to this entry. In the preferred embodiment of the invention, version times are indicated by the number of seconds elapsed since an arbitrary starting moment.

creationTime:
This parameter indicates the version time of the node described by this entry.

deletionTime:
If the node is "deleted" from the graph, and the node is an archive node, this parameter is assigned a value indicating the time the node was deleted.

status:

This parameter indicates whether the node is an archive type node.

pathPrefix:

This parameter enables the UNIX operating system to determine the storage location of the node.

creator, deletor:

These parameters identify the users creating and deleting the node.

firstOutLink:

This parameter is a pointer to an entry in a link dictionary 26 which is a file for storing the previously mentioned link records. The firstOutLink parameter points to the link dictionary 26 entry (i.e., the link record) describing a first of a set of all "out links" pointing from this node to other nodes in a graph.

firstInLink:

This parameter is a pointer to another entry in the link dictionary 26 describing a first of a set of all "in links" pointing to this node from any other node in the graph.

attributes:

This is a set of attribute/value parameter pairs pointing to entries in an attribute name dictionary 32 and an attribute values dictionary 34 of FIG. 2. Each attribute name dictionary 32 entry indicates the name of a particular attribute and each attribute values dictionary 34 entry indicates a particular node or link attribute value. One attribute parameter pair is included in each node dictionary 24 entry for each attribute characterizing the node.

eventActions:

This is an array of parameters and associated values. Each parameter indicates whether a demon string is to be invoked in response to a particular action with respect to the node (i.e., access, modify, destroy, etc.) Each value is a string index for a demon character string to be invoked and also contains a pointer to an entry in a demon value versions file 40 where a string index of a previous version of a demon string is stored, if any. The demon value version file entries relating to successive versions of the same demon are all linked to form a linked list which may be traversed to find any previous version of a demon value.

Link dictionary 26 of FIG. 2 contains a set of entries each comprising a link record storing information about a corresponding link. Each link dictionary 26 entry includes the following parameters:

fromNode:

This is a node Index parameter which points to the node dictionary 24 entry for the current version of a "from node" from which the link points.

toNode:

This is another node Index parameter pointing to the node dictionary 24 entry for the current version of a "to node" to which the link points.

fromVersionTime:

This is a version time parameter identifying the particular version of the "from node" that the link connects.

toVersionTime:

This is a version time parameter identifying the particular version of the "to node" that the link connects.

deletionTime:

This is a version time parameter indicating the time the link was deleted from the graph, if the link was deleted. If the link has not been deleted the deletionTime parameter is assigned a maximal non-zero integer.

deletor:

This parameter identifies the user deleting the link from the graph.

attributes:

This is a set of parameter pairs pointing to entries in the attribute values dictionary 34 and the attribute name dictionary 32. One attributes parameter pair is included in each link dictionary 26 entry for each attribute characterizing the link. The attribute values dictionary 34 entries indicate the values of attributes associated with the link and the attribute name dictionary 32 entries indicate the names of the attributes associated with the link.

currentVersion:

This parameter points to an entry in a link version file 28 of FIG. 2 containing parameters indicating "link point positions" within the sequences of data stored in the "from node" and in the "to node" related by the link. A "link point position" refers to a particular bit of data in a node to which or from which the link points.

previousVersion, prevIndex:

These parameters point to a second entry in the link version file 28 describing a previous version of the link.

nextOutlink:

This parameter points to another entry in the link dictionary 26 associated with another link directed from the same "from node" as this link (i.e., the link associated with the present link dictionary entry). The nextOutlink parameters in each link dictionary 26 entry interconnect all of the link dictionary entries describing links directed from any particular node to form a linked list of "out link" entries. The firstOutLink parameter within the node dictionary 24 entry describing each node points to the first link dictionary 26 entry of the linked list of "out link" entries and all other out links can be determined by traversing the out link list.

nextInlink:

This parameter points to another entry in the link dictionary 26 associated with a link directed to the same node as this link (i.e., the link associated with the present link dictionary entry). The nextInLink parameters in each link dictionary 26 entry interconnect all of the link dictionary entries describing links directed to any particular node to form a linked "in link" list of entries. The firstInLink parameter within the node dictionary 24 entry describing a particular node points to the first link dictionary 26 entry of the linked list of out link entries. Thus a linked "in link" list of link dictionary entries is also provided for every node. The "in links" for each node can be determined by traversing the associated "in link" list.

The attribute value dictionary 34 of FIG. 2 contains an entry for each attribute value for each node or link. Each entry includes the following parameters:

entity:

   This is a pointer (NodeIndex or LinkIndex) to the node dictionary 24 or link dictionary 26 entry to which the attribute value referenced by the attribute value dictionary 34 entry is assigned.

currentValue:

   The value of a link or node attribute may be changed from time to time and a version history of each attribute value is maintained for archive nodes and links connecting archive nodes. Attribute values are also assigned a version time to identify different versions of the same attribute. The currentValue parameter is a pointer to an entry in an attribute value version file 36 containing a record of the version time associated with the current value of the attribute and also containing an integer value or a string index parameter representing the character string name of the current attribute value. A character string represented by a string index parameter is determined by accessing a string table 46 of FIG. 2.

previous, prevIndex:

   The attribute value version file 36 also contains entries describing previous versions of the attribute value and these entries in the attribute value versions file form a linked list which may be traversed to ascertain any previous version of a node or link attribute value. The previous and prevIndex parameters are utilized to locate the first entry of the linked list.

The attribute name dictionary 32 of FIG. 2 contains an entry for each attribute name and includes string index parameters representing the character strings which name the attribute. An entity attributes dictionary 30 of FIG. 2 is provided to store excess attribute parameter pairs which cannot be stored in the node dictionary 24 or link dictionary 26 entries relating to various nodes and links due to fixed sized records. Each node dictionary 24 or link dictionary 26 entry which is filled with attribute parameter pairs includes a pointer to an entry in the entity attributes dictionary 30 where an additional attribute parameter pair is stored. Entries in the entity attribute dictionary relating to the same node are also linked to form a linked list which may be traversed to determine all attribute value pairs for the node or link not otherwise stored in the node or link dictionary entry for the node or link.

Character strings are used for attribute names, attribute values, UNIX system directory prefixes, demons and user names. All strings are referenced by a string index parameter and each string is assigned a unique string index parameter value. The string index table 44, along with a string hash table 42 and a string table 46 of FIG. 2, are provided to convert from character strings to string index parameter values and vice versa. The string hash table 42 implements a character string hashing technique providing a pointer to an entry in the string index table 40 where a string index number relating to a hashed character string is stored. The string table 46 is utilized to convert a string index number to a corresponding character string.

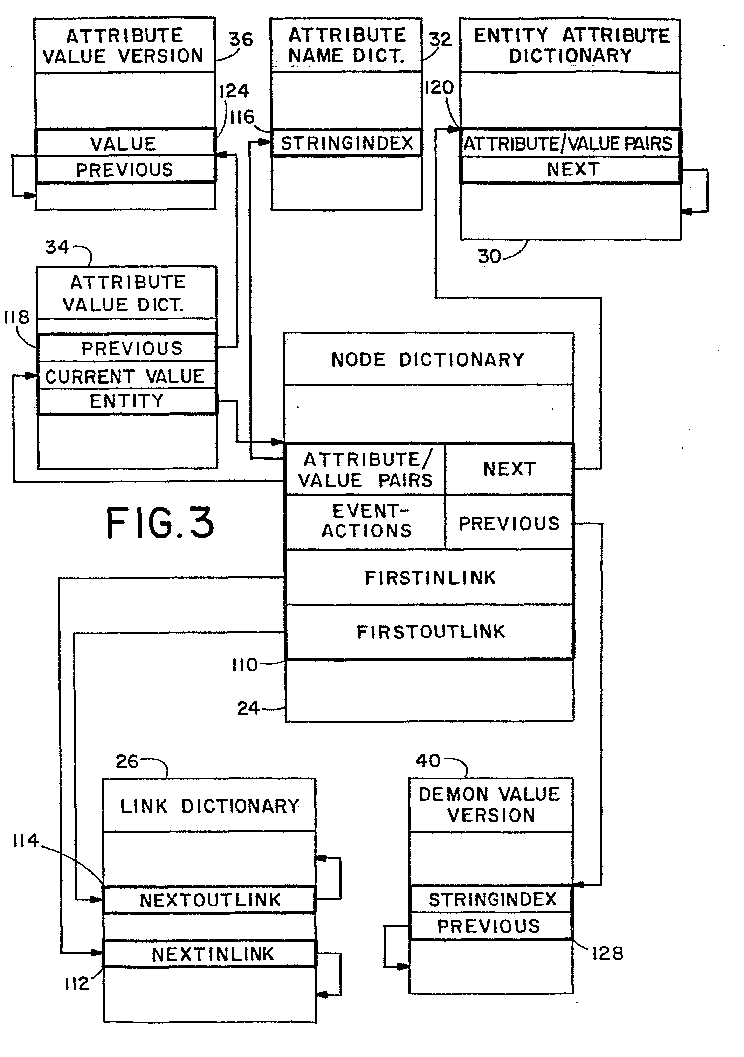

The relationships between the node dictionary 24 and various other files of FIG. 2 are illustrated in FIG. 3. A selected portion of the parameters contained in one entry 110 of node dictionary 24 is shown including the firstInLink parameter which points to an entry 112 in the link dictionary 26. Entry 112 describes the first link of the "in link" list of all links pointing to the node described by entry 110 and contains the nextInLink pointer to the next link dictionary entry of the in link list. Similarly the firstOutLink parameter of the node dictionary entry 110 points to an entry 114 in the link dictionary 26 comprising the first entry of the linked list of "out link" entries describing all links pointing from the node described by entry 110. Entry 114 includes the nextOutLink parameter which points to the next link dictionary 26 entry on the out link list.

One attribute parameter pair (labeled "attribute" and "value") of the node dictionary 24 entry 110 is illustrated in FIG. 3. The attribute portion of the pair points to an entry 116 of the attribute name dictionary 32 which contains the stringIndex parameter associated with the name of the attribute. The value portion of the pair points to an entry 118 of the attribute value dictionary 34. As discussed hereinabove, when a node is assigned more attribute parameter pairs than can be stored in the node dictionary 24 entry for the node, the excess attribute parameter pairs are stored in the entity attribute dictionary 30. In the example of FIG. 3, a "next" pointer in node dictionary entry 110 points to an entry 120 of the entity attribute dictionary containing a next group of attribute pairs. Entry 120 also includes a "next" pointer to another attribute dictionary entry containing an additional group of attribute pairs associated with the node described by node dictionary entry 110.

The attribute value dictionary 34 entry 118 referenced by the value pointer in node dictionary entry 110 includes the currentValue parameter containing the integer value or the stringIndex number related to the attribute value name. Entry 118 further includes the "previous" pointer to an entry 124 containing an attribute value referencing a previous version of the attribute value and includes another "previous" pointer linking an additional attribute value version file 36 entry associated with an earlier version of the attribute value. The attribute value dictionary entry 118 also contains the entity parameter which points back to the node dictionary entry 110.

The attribute value dictionary 34 in conjunction with the attribute value version file 36 permit the machine 14 to determine every node having an attribute of a selected value, to change the nature of an attribute value, and to determine previous versions of each attribute value. For instance, an "ownership" attribute might be created for each node to indicate the name of a person responsible for approving changes to data in the node. If Smith is responsible for changes to a set of nodes, then the "ownership" attribute for each node in the set may be assigned a value of "Smith". Assuming that the node corresponding to entry 110 is one node of the set, then "Smith" is the current value stored in entry 118 of attribute value dictionary file 34. If ownership responsibility for the set is transferred to Jones, then it is necessary to change the attribute value for all nodes in the set. A new attribute value version file 36 record similar to record 124 is created to store the old value "Smith". The "previous" pointer in this record is adjusted to point to record 124. The currentValue parameter in record 118 is changed to "Jones" and the "previous" pointer in record 118 is changed to point to the new record in the attribute value version file 36 containing the "Smith" value.

The node dictionary 24 entry 110 illustrated in FIG. 3 includes a set of eventAction parameters each containing the stringIndex parameter referencing the demon character string to be produced in response to a selected node event. Entry 110 also includes a "previous" pointer associated with each eventAction parameter pointing to an entry 128 of the demon value version file 40 which contains the string index of an earlier version of the demon along with another "previous" pointer linking an additional demon file 40 entry associated with a still earlier version of the demon.

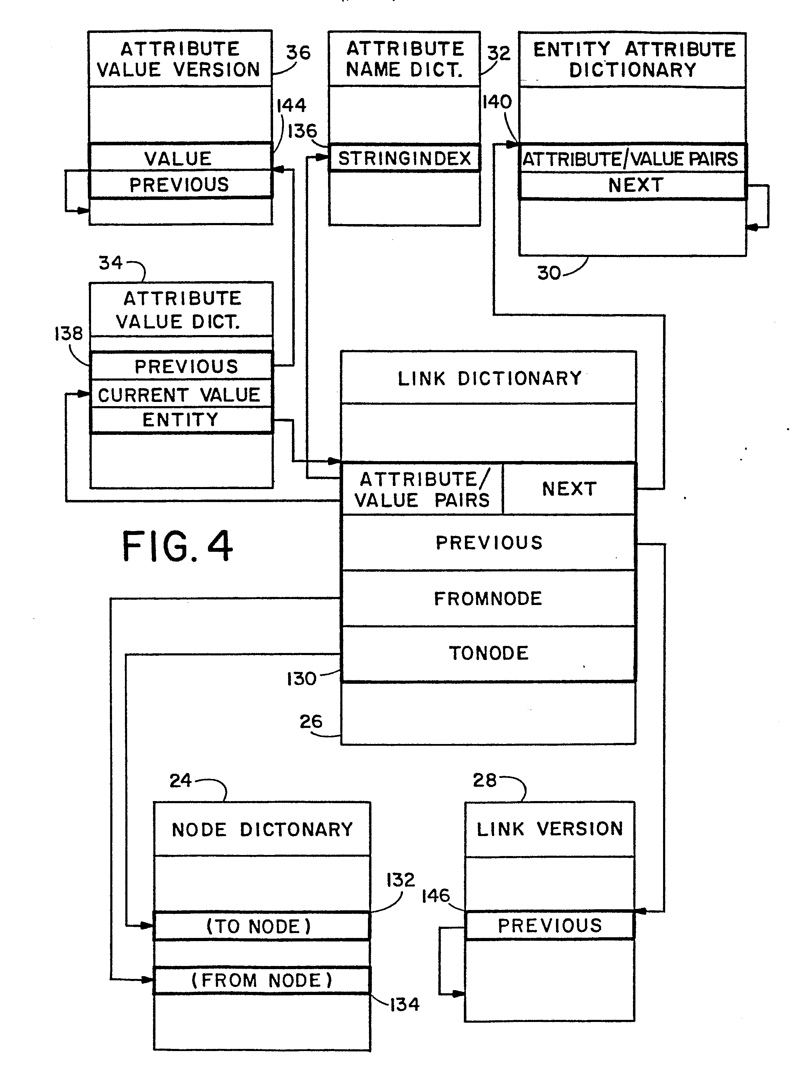

Relationships between the link dictionary 26 and various other files are illustrated in FIG. 4. A selected portion of the parameters for one entry 130 of link dictionary 26 is shown including the toNode parameter which points to an entry 132 in the node dictionary 24 which describes the "to node" associated with the link. The fromNode parameter of entry 130 points to an entry 134 in the node dictionary 24 which describes the "from node" associated with the link. One link attribute parameter pair of the link dictionary 26 entry 130 is illustrated. An attribute portion of the pair points to an entry 136 of the attribute name dictionary 32 containing the stringIndex parameter associated with the name of the link attribute. The value portion of the pair points to an entry 138 of the attribute value dictionary 34. A next pointer in entry 130 points to an entry 140 of the entity attribute dictionary 30 containing a next group of attribute pairs. Entry 140 also includes another next pointer to another entity attribute dictionary 30 entry containing an additional group of attribute parameter pairs associated with the link described by link dictionary entry 130.

The attribute value dictionary 34 entry 138 includes the currentValue parameter containing the integer value or the stringIndex of the link attribute value name. Entry 138 further includes the previous pointer to an entry 144 containing an attribute value referencing a previous version of the link attribute value. Entry 144 contains another previous pointer linking an additional attribute value version file 36 entry associated with a still earlier version of the link attribute value. The attribute value dictionary entry 138 contains the entity parameter which points back to the node dictionary entry 130.

The link dictionary 26 entry 130 of FIG. 4 is further provided with a previous pointer to an entry 146 of link version file 28 which contains information about a previous version of the link. Entry 146 contains a previous parameter pointing to an entry of the link version file 28 containing information regarding a still earlier version of the link.

A transaction log file 41 of FIG. 2 is provided to store information regarding changes made to the files of FIG. 2 when the machine is carrying out an operation requested by a user. The transaction log enables the machine 14 to "undo" any changes made to the other files of FIG. 2 if for any reason a requested operation is improperly terminated. Once an operation is successfully completed, the information stored in the transaction log is discarded.

Appendix I contains software listings of programs according to the present invention for controlling various data files depicted in FIG. 2. Referring to FIG. 2 and Appendix I, an f_nodes program 43 buffers input and output access to the node dictionary 24, a program f_links 49 buffers input and output access to the link dictionary file 26 and the program f_linkHist 48 buffers access to the link version file 28. An f_entAtt program 50, an f_attDef program 52, an f_attValue program 54 and an f_attHist program 56 buffer access to the entity attribute dictionary 30, the attribute name dictionary 32, the attribute value dictionary 34 and the attribute value version file 36, respectively. Similarly, the program f_demonHist (block 58) buffers input and output access for the demon value versions file 40, while the f_strings program 60 buffers access to the string hash table 42, the string index table 44 and the string table 46. A pair of programs 45 (directory and direct) define the data structures used to represent a directory and implement the operating of a directory.

Appendix I also contains listings of programs for contents files 22 of FIG. 2. Each node contents file 22 contains the current version of a data file and also contains the version history data indicating the changes required to the current version in order to produce prior versions of an archive file. An ns_node program 62 controls changes to the current version data stored in the node contents files 22 while an archive program 64 controls the input and output of version history data stored in the node contents files. An lcs program 66 produces the version history data to be stored in the node contents files by comparing a new version of a file provided by a user with the most recently stored version.

Appendix I further contains a listing for a "strings" program which utilizes the string tables via the f_strings program 60 to find and return a string index relating to a given input character string. The strings program also creates new index numbers for new character strings. A "log" program 70 in Appendix I controls input and output to the transaction log file 41 and implements the recovery mechanism for improper terminations of a graph access by a user. The log program 70 also synchronizes multi-user access to a graph.

Appendix I also contains listings for a set of programs according to the present invention for implementing various operations requested by users. The operations are defined according to the following notation:

$$\text{operand}_1 \times \text{operand}_2 \times \ldots \times \text{operand}_n \longrightarrow$$
$$\text{result}_0 \times \text{result}_1 \times \ldots \times \text{result}_m$$

wherein n is greater than or equal to 1 and m is greater than or equal to 0. Each $\text{operand}_i$ and $\text{result}_i$ has a "domain" of values. Additionally, $Y^n$ means $Y \times Y \times \ldots Y$ with n Y's, and $Y^*$ means $Y^m$ for some m greater than or equal to 0. The domains of the operands and results (i.e., the values that each operand or result may be assigned) are as follows:

Operand or Result:    domain:

Attribute:            an attribute name (a character
                      string)

AttributeIndex:       unique identification for an
                      attribute name (a number)

Boolean:              true/false indicator

Contents:             the data in a node

Context:              a unique identification for a
                      currently accessed graph

Demon:                a demon value

Difference:           a deletion, insertion or
                      replacement instruction

Directory:            a valid UNIX file directory name

Event:                an event which invokes a demon
                      string

Explanation:          explanatory text

LinkIndex:            an identification for a link

Machine:              an identification for an
                      individual computer in a compu-
                      ter network

NodeIndex:            an identification for a node

Position:             a number representing the posi-
                      tion of a selected piece of
                      data in a node

Predicate:            a Boolean formula in terms of
                      attributes and their values

ProjectId:            a unique identification for a
                      graph

Protections:          one of a plurality of file
                      protection modes

Time:               a non-negative integer repre-
                    sentation of a given data and
                    time

Value:              an attribute value

Referring again to FIG. 2, a graph program
listed in Appendix I implements the following
operations affecting the directory:

CreateGraph:
        Directory x Protections ⟶ ProjectId

The operation CreateGraph creates a new "empty"
graph in a specified UNIX directory (Directory)
using a specified UNIX file protection mode
(Protections).  A graph is initially "empty" in
the sense that it does not contain any nodes.  The
CreateGraph operation returns to the user invoking
the operation a ProjectId parameter comprising a
unique identification for the graph.  The user
thereafter must specify the ProjectId and Directory
parameters whenever opening the new graph in order
to identify the graph to be opened.

DestroyGraph:
        ProjectId x Directory ⟶ -

The operation DestroyGraph destroys an existing
graph located in Directory.  The ProjectId must
have the same value as returned by the CreateGraph
operation that created the graph in the first
place.  The destruction of a graph includes the
destruction of all files of FIG. 2 relating to the
graph.

OpenGraph:

    ProjectId x Machine x Directory ⟶ Context

A user invokes the OpenGraph operation to access (open) an existing graph located in a specified directory (Directory) for a storage device maintained by a selected computer (Machine) of a multiple computer system. The value of the ProjectId parameter must be the same as returned by the CreateGraph operation that created the graph. "Context" is a unique identifier for the graph and is used when invoking other operations once the graph is open. The value of Context is arbitrary but is different for each concurrently opened graph.

AddNode:

    Context x Boolean ⟶ NodeIndex x Time

Once a user has opened a graph the user may add a new node. First the user adds an empty node by invoking the AddNode operation to create a new empty node in the graph identified by Context. If Boolean is true, then a version history is maintained for the node, i.e., the node is maintained as an archive node. If Boolean is false, the node is considered to be a file node and version histories are not maintained. Once the node is created, AddNode returns the NodeIndex and Time parameters for the new node. Once an empty node is created, a user may invoke another operation "modifyNode" (described hereinbelow) to fill it with data.

DeleteNode:

    Context x NodeIndex ⟶ –

The DeleteNode operation removes a node identified by NodeIndex from a graph (identified by Context) along with all links into or out of the deleted node. In the case of a file node, the node contents file 22 of FIG. 2 is removed from storage while in the case of an archive file, the node is marked "deleted" and the current contents portion of the node contents file and the node history portion of the node contents file are retained so that previous versions of the node may be reconstructed.

AddLink:

$$\text{Context x LinkPt}_1 \text{ x LinkPt}_2 \longrightarrow \text{LinkIndex x Time}$$

The AddLink operation creates a new link between two nodes. Referring to FIG. 5, illustrating a link between two node contents files, the data is stored in each node contents file as a sequence of bytes. A link connects one selected byte 100 in a "from" node 102 to another selected byte 104 in a "to" node 106. A link point (LinkPt), comprising the particular byte of the sequence of bytes in a node contents file where a link is attached, is specified according to the following:

$$\text{LinkPt = NodeIndex x Position x Time}$$

where NodeIndex identifies the node and Position identifies the byte sequence position in the node to which the link points. A version histroy of the link is maintained if either link point (LinkPT$_1$ or

LinkPT$_2$) refers to an archive node. Time references the version time of the node and the machine assumes that the node is the current version unless the user declares a nonzero Time. LinkPt$_1$ identifies the byte in the "from" node where the link begins and LinkPt$_2$ identifies the byte in the "to" node where the link ends. The AddLink operation returns LinkIndex, the unique identifier for the new link, and the creation time (Time) for the link.

CopyLink:

    Context x LinkIndex x Time$_1$
    x Boolean x LinkPt $\longrightarrow$ LinkIndex x Time

The CopyLink operation creates a new link between two nodes where one end of the link is identical to that of an existing link identified by LinkIndex and Time$_1$. Thus, this end of the existing link is taken to be one end of the new link while the other end of the new link is identified by LinkPt. If Boolean is true then the source of the new link point is identified by LinkIndex and the destination is identified by LinkPt. If Boolean is false the LinkIndex identifies the destination of the new link and LinkPt identifies the source. The copyLink operation returns a LinkIndex identifier for the new link and its creation time (Time).

DeleteLink:

    Context x LinkIndex $\longrightarrow$ -

The DeleteLink operation removes the link identified by LinkIndex of the graph given by Context but does not delete link version histories.

The graph program 72 of FIG. 2 implements the above described operations utilizing the direct and the directory programs 45 to control the contents of the node dictionary file 24. The graph program 72 provides information regarding the operations it performs to the log program 70 and is adapted to acquire transaction data from the log program during a recovery operation after an improper user termination.

Referring again to FIG. 2, a linear program 74, also listed in Appendix I, implements the following operation:

LinearizeGraph:

$$\text{Context} \times \text{NodeIndex} \times \text{Time} \times \text{Predicate}_1 \times \text{Predicate}_2 \times \text{AttributeIndex}_1{}^m \times \text{AttributeIndex}_2{}^n \longrightarrow (\text{NodeIndex} \times \text{Value}^m)^* \times (\text{LinkIndex} \times \text{Value}^n)^*$$

This operation performs the previously discussed "traversal" search. The LinearizeGraph operation returns a linked sub-graph of a version of a graph identified by Context and Time. The sub-graph contains every node of the graph which satisfies $\text{Predicate}_1$ and which can be reached from a starting node (identified by NodeIndex) by traversing only links satisfying $\text{Predicate}_2$ and passing through other nodes satisfying $\text{Predicate}_1$. A "predicate" is an expression which indicates a selected set of node or link attributes along with one or more values associated with each attribute. To "satisfy" a predicate a node or a link must possess the attribute values indicated by the predicate. Node and link predicates are expressed according to the following grammar:

```
predicate   ⟶  expression

expression  ⟶  -expression
            ⟶  (expression)
            ⟶  term
            ⟶  expression & expression
            ⟶  expression | expression

term        ⟶  attribute relop value
            ⟶  'true'
            ⟶  'false'
relop       ⟶  '<'
            ⟶  '≮'
            ⟶  '≯'
            ⟶  '>'
            ⟶  '='
            ⟶  '≠'


attribute   ⟶  "string"

value       ⟶  integer|"string"|'*'
```

In the above grammar the character "*" represents any value.  Assuming, for instance, that nodes have an attribute named "type" with a value "text" and an attribute named "year", a typical Predicate$_1$ expression according to the above grammar reads as follows:

```
type = text & year > 1960.
```

This predicate indicates that only text nodes written after 1960 are to be included in the sub-graph.  The sub-graph is returned by the Linearize-Graph operation as a set of NodeIndex and LinkIndex values identifying the nodes and links of the sub-graph. The LinearizeGraph operation also returns the values (Value*) of selected attributes associated with the nodes and links of the sub-graph, the node attributes being selected according to $AttributeIndex_1{}^m$ and the link attributes being selected according to $AttributeIndex_2{}^n$. In performing the LinearizeGraph operation the linear program obtains attribute values for the nodes and links by invoking an attribute program 82 also listed in Appendix I (discussed hereinbelow) and utilizes a "search" program 75, listed in Appendix I, to evaluate the attributes of the node and links to determine if $Predicate_1$ or $Predicate_2$ is satisfied.

A "filter" program 76 of FIG. 2 (listed in Appendix I) carries out the following operation:

GetGraphQuery:

$$Context \times Time \times Predicate_1 \times Predicate_2 \times AttributeIndex_1{}^n \longrightarrow (NodeIndex \times Value^m)* \times (LinkIndex \times Value^n)*$$

This operation performs the previously described "query search. The GetGraphQuery operation returns a sub-graph of the graph given by Context as it existed at time Time. The sub-graph includes all nodes satisfying $Predicate_1$ and all links satisfying $Predicate_2$ connecting these sub-graph nodes. $Predicate_1$ and $Predicate_2$ follow the grammar described hereinabove for the predicates associated with the LinearizeGraph operation. The sub-graph returned by the GetGraphQuery operation comprises a set of NodeIndex and LinkIndex values identifying the nodes of the graph satisfying

Predicate$_1$ and any interconnecting links satisfying Predicate$_2$. The operation also returns the values (Value*) of selected attributes associated with the nodes and links of the sub-graph, the node attributes being selected according to AttributeIndex$_1$$^m$ and the link attributes being selected according to AttributeIndex$_2$$^n$. In performing this operation, the filter program 76 also makes use of the attribute program 82 and the search program 75.

A "ds_node" program 78, listed in Appendix I, carries out the following operations affecting nodes:

OpenNode:

$$\text{Context} \times \text{NodeIndex} \times \text{Time}_1 \times \text{AttributeIndex}_1{}^m \times \text{AttributeIndex}_2{}^n \longrightarrow \text{Contents} \times \text{Value}^m \times \text{Time}_2 \times (\text{LinkPt} \times \text{Value*})*$$

If Time$_1$ is zero, the OpenNode operation returns the contents (Contents) and current version time (Time$_2$) of an existing node identified by NodeIndex and of the graph identified by Context. If Time$_1$ is non-zero then OpenNode returns the latest version of the contents of the node as of Time$_1$ and the version time (Time$_2$) of the returned contents. The operation also returns the values (Value*) of the node attributes of the existing node identified by AttributeIndex$_1$$^m$, the LinkPt identification of each link connected to the node, and the values of the link attributes identified by AttributeIndex$_2$$^n$. The OpenNode node operation accesses the current version of the node in a node contents file 22 by calling the ns_node program 62.

ModifyNode:

Context x NodeIndex x Time x Contents x (LinkIndex x Position)\* $\longrightarrow$ -

The ModifyNode operation is invoked to store a new version (Contents) of an existing node of the graph Context identified by NodeIndex and Time. The value of Time must be equal to the current version of the node. Otherwise the ModifyNode operation returns a conflict indication to the user and does not store the new node version. The operation ModifyNode also repositions the starting or ending point (Position) in the node of each existing link identified by LinkIndex. The ds_node program 78 uses the ns_node program 62 to store the new node contents. The ns_node program in turn makes use of the archive program 64 and the lcs program 66 to create a new version history when the node being modified is an archive node. The ds_node program 78 also calls the f_nodes program 43 to modify entries in the node dictionary 24 to reflect the indicated changes in link points.

GetNodeTimeStamp:

Context x NodeIndex $\longrightarrow$ Time

The GetNodeTimeStamp operation returns the current version time for the node of the graph Context identified by NodeIndex. The current version time is stored in the node dictionary file 24.

ConvertFileToArchive:

Context x NodeIndex $\longrightarrow$ -

As discussed hereinabove, when a node is created by the addNode operation it may be designated as a file node, wherein only the current version of the node is maintained, or as an archive node, wherein version histories of the node are maintained. The ConvertFileToArchive operation is invoked to convert a node (identified by NodeIndex and Context) originally designated as a file node to an archive node so that a complete version history will be maintained for the node thereafter.

ChangeNodeProtections:

Context x NodeIndex x Protections $\longrightarrow$ -

The ChangeNodeProtections operation sets the file protection mode for the file storing the contents of a node identified by NodeIndex and Context to the mode indicated by Protections.

GetNodeVersions:

Context x NodeIndex $\longrightarrow$ Version$_1^+$ x Version$_2^*$

The GetNodeVersions operation returns the version history for the node identified by NodeIndex and Context including "major versions" identified by Version$_1^+$ and "minor versions" identified by Version$_2^*$. A "Version" is defined as follows:

Version = Time x Explanation

where Time identifies the version and Explanation is text explaining the nature of the version (i.e., whether it is a major or minor version). Major versions are updates to the contents of the node while minor versions are other changes relating to
the node, such as relating to adding a link or
changing an attribute value, but which do not
change the contents of the node.  The ds_node program 78 utilizes the f_nodes program 43 to acquire
version history data from the node dictionary.


GetNodeDifferences:

Context x NodeIndex x $Time_1$ x $Time_2$ $\longrightarrow$ Difference*


The GetNodeDifferences operation returns the
"difference" between the $Time_1$ and $Time_2$ versions
of the node identified by NodeIndex and Context,
i.e., a set of addition, deletion and insertion
directions for changing the $Time_1$ version to the
$Time_2$ version.  The ds_node program uses the
ns_node program 62, the archive program 64, and the
lcs program 66 to acquire the version histories
from the node contents files 22.

A "ds_link" program 80, listed in Appendix I,
carries out the following operations relating to
links:


GetToNode:

Context x LinkIndex x $Time_1$ $\longrightarrow$ NodeIndex x $Time_2$


The GetToNode operation returns the identification NodeIndex and version time ($Time_2$) of a
destination node of the $Time_1$ version of a link
identified by LinkIndex of a graph identified by
Context.  The ds_link program 80 makes use of the
f_links program 49 and the f_linkHist program 48 to
obtain the LinkIndex numbers from the link dictionary 26 and the link version file 28.

GetFromNode:

Context x LinkIndex x $Time_1$ $\longrightarrow$ NodeIndex x $Time_2$

The GetFromNode operation returns the identification NodeIndex and version time ($Time_2$) of a source node of a link identified by LinkIndex and Context and a version time ($Time_1$).

An "attribute" program 82 carries out the following operations:

GetAttributes:

Context x Time $\longrightarrow$ (Attribute x AttributeIndex)*

The GetAttributes operation returns all of the attributes (Attribute) and their associated AttributeIndexes that existed at a given time (Time) for the graph identified by Context. It will be recalled that Context is a unique identifier for the graph established as a result of the openGraph operation discussed hereinabove. In order to acquire AttributeIndex numbers associated with nodes and links, the attribute program 82 invokes the f_attDef program 52 which acquires the AttributeIndex numbers from the attribute name dictionary 32. The attribute program 82 calls the strings program 68 to determine the attribute name (Attribute) associated with each AttributeIndex number.

GetAttributeValues:

Context x AttributeIndex x Time $\longrightarrow$ Value*

The GetAttributeValues operation returns a list of the values (Value*) which have been assigned to a selected attribute identified by AttributeIndex for a graph identified by Context at a given time. The attribute program 82 employs the f_attValue program 54 and the f_attHist program 56 to locate attribute value string index data stored in the attribute value version file 36 and uses the strings program 68 to convert the attribute value string index data to the character strings representing the attribute values associated with the selected AttributeIndex.

GetAttributeIndex:

Context x Attribute ⟶ AttributeIndex

The GetAttributeIndex operation of the attribute program makes use of the strings program 68 to return a unique string index identification (AttributeIndex) for an attribute name associated with the graph Context. If the attribute is new, the operation assigns a new attribute index value to it.

SetNodeAttributeValue:

Context x NodeIndex x AttributeIndex x Value ⟶ -

The SetNodeAttributeValue assigns a new value to an attribute (indicated by AttributeIndex) of the current version of a node identified by NodeIndex and Context and assigns a value (Value) to the attribute. If the node identified by NodeIndex is an archive node, then a new version of the attribute value is created.

GetNodeAttributeValue:

Context x NodeIndex x AttributeIndex x Time ⟶ Value

The GetNodeAttributeValue operation returns a
value (Value) for an attribute identified by
AttributeIndex at a given time (Time) for a given
node identified by NodeIndex and Context using the
f_nodes program 43 to access the node dictionary 24.

DeleteNodeAttribute:
    Context x NodeIndex x AttributeIndex ⟶ -

The DeleteNodeAttribute operation deletes the
attribute identified by AttributeIndex for the node
identified by NodeIndex and Context using the
f_nodes program 43 to modify the node dictionary 24.

GetNodeAttributes:
    Context x NodeIndex x Time ⟶ (Attribute x
    AttributeIndex x Value)*

The GetNodeAttributes operation returns all of
the attribute names (Attribute), their corresponding string index identifiers (AttributeIndex),
and their values (Value*) as of a selected time
(Time) for a selected node (NodeIndex) of the graph
Context.  The AttributeIndex is obtained from the
node dictionary 24 through the f_nodes program 43
and ValueIndex parameters for the attributes are
obtained from the attribute value dictionary 34
through the f_attValue program 54.  The ValueIndex
and AttributeIndex numbers thus acquired are converted into character strings (Attribute and Value)
by calls to the strings programs 68.

SetLinkAttributeValue:
    Context x LinkIndex x AttributeIndex x Value ⟶ -

The SetLinkAttributeValue operation sets the value (Value) of a selected attribute (AttributeIndex) of a link (LinkIndex) of the graph Context by adding an attribute/value pointer pair to the link dictionary 26. To do so, the attribute program calls the ds_link program 80 which accesses the link dictionary 26 through the f_links program 49. If the link is attached to an archive type node (i.e., if version histories of the node are to be maintained) a new version of the attribute value is created in the attribute value dictionary 34 accessed through the f_attValue program 54.

GetLinkAttributeValue:

    Context x LinkIndex x AttributeIndex x Time ⟶ Value

The GetLinkAttributeValue operation returns the value (Value) of an attribute identified by AttributeIndex for a selected version (Time) of a link identified by LinkIndex of the graph identified by Context. The value pointer associated with the attribute is obtained from the link dictionary 26 by a call to the ds_link program 80 and the value of the attribute is then obtained from the attribute value dictionary 34 by a call to the f_attValue program 54.

DeleteLinkAttribute:

    Context x LinkIndex x AttributeIndex ⟶ -

The DeleteLinkAttribute operation deletes from the link dictionary 26 the attribute indicated by AttributeIndex for the link of the graph Context referenced by LinkIndex.

GetLinkAttributes:

    Context x LinkIndex x Time ⟶ (Attribute x
    AttributeIndex x Value)*

The GetLinkAttributes operation returns the attribute name, (Attribute), the string index for the attribute (AttributeIndex), and the value (Value) of each attribute for a link of the graph Context identified by LinkIndex at a selected time. In performing this operation the attribute program 82 makes calls to the ds_link program 80 to acquire the string index numbers from the link dictionary 26 or link version file 28, and makes calls to the f_attValue program 54 and the f_attHist program 56 to acquire ValueIndex numbers referencing the attribute values. The strings program 68 is also utilized to return the attribute and value character strings referenced by the string index numbers

A "demon" program 84, listed in Appendix I, carries out the following demon operations:

SetGraphDemonValue:

    Context x Event x Demon ⟶ -

The SetGraphDemonValue operation creates a demon string to be invoked whenever a graph operation defined by Event is performed with respect to a graph identified by Context. The graph operations which may be identified as Events for purposes of invoking a demon string include OpenGraph, AddNode, DeleteNode, AddLink, CopyLink, and DeleteLink. In carrying out this operation the demon program 84 calls the ds_links program 80 and the ds_node program 78 to modify entries in the link dictionary 26 and the node dictionary 24 and calls the f_demonHist program 58 to create the appropriate entries in the demon dictionary 38 and the demon value versions file 40. The demon program also utilizes the strings program 68 to store the demon character string in the string table 46 and to create a string index for the demon in the string index table 44.

GetGraphDemons:
    Context x Time ⟶ (Event x Demon)*

The GetGraphDemons operation returns all of the events (Event) for a version of a graph identified by Context and Time, which invoke a demon string and also returns the demon string invoked.

SetNodeDemon:
    Context x NodeIndex x Event x Demon ⟶ -

The SetNodeDemon operation creates a demon string (Demon) to be invoked whenever an operation defined by Event is performed with respect to a node of the graph Context identified by NodeIndex. The operations which may be identified as an Event for purposes of invoking a demon string include OpenNode and ModifyNode discussed hereinabove.

GetNodeDemons:
    Context x NodeIndex x Time ⟶ (Event x Demon)*

The GetNodeDemons operation returns all of the events (Event) affecting a version of a node of graph Context identified by NodeIndex and Time, which invoke a demon string. The GetNodeDemons operation also returns the demon strings (Demon) invoked.

Thus the data file management machine of the present invention is adapted to deal effectively with the problem of locating files of interest in a large computerized data storage system. The above described operations permit the machine to organize data files into graphs comprising file nodes interconnected by links wherein both the nodes and the links may be assigned user-definable attributes. Node attributes may be assigned to describe the nature of the contents of each node and link attributes may be assigned to describe the nature of relationships between nodes. The GetGraphQuery and LinearizeGraph operations make use of the assigned node and link attributes to retrieve subgraphs containing only those nodes and links characterized by user selected sets of attribute values. The subgraphs make it easier for a user to locate a particular file having particular attribute values (i.e., subject matter, author, etc.) without knowing the file name, by excluding from the subgraph irrelevant files which do not share the same attribute values from the subgraph, thereby reducing the number of files the user must peruse to find a particular file. The subgraphs also make it easier for a user to locate files which are related to a selected file in some particular way by eliminating nodes linked to the selected file by links which do not have selected link attribute values. The combination of node and link attribute assignment and search capability of the machine allows highly selective user definition of nodes and links to be included in a subgraph, enabling a user to more easily locate and determine the nature of data files and their interrelationships than is possible when only node attributes or only link attributes may be assigned.

The above described operations not only enable the data file management machine of the present invention to document changes to data files (nodes) but also to document changes in the relationships (links) between files. The machine maintains node version histories permitting the reconstruction of the contents of previous versions of archive nodes as well as link version histories describing the links connecting previous versions of archive nodes. The machine is also adapted to maintain attribute histories documenting changes to attribute values associated with archive nodes and their interconnecting links. Version histories for demon strings associated with archive nodes are additionally maintained. If, for instance, all nodes of a graph are archive nodes then records of every significant change to the graph are maintained and the state of the graph at any previous time can be substantially reconstructed.

The user definable demon character strings, produced by the data file management machine of the present invention when selected graph and node operations are invoked, enable a user to easily adapt the present invention to initiate execution of (or provide input to) any program accessible to a computer operating system receiving the demons. This feature of the invention provides a simple means for integrating the operation of the data file management machine with other programs running on the computer system.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

## Claims

1. A data file management method comprising the steps of:

storing data files in a computer accessed data storage device;

relating pairs of said data files according to user-defined values of user-defined relationship attribute parameters;

characterizing the content of each of said data files according to user-defined values of user-defined file attribute parameters; and

storing records of said values of said relationship and file attribute parameters.

2. The data file management method according to claim 1 further comprising the step of identifying groups of said data files according to said stored relationship and file attribute parameter values.

3. A data file storage and retrieval method comprising the steps of:

a. storing data files in a computer accessed data storage device;

b. storing node records in said computer accessed data storage device, each node record being associated with one of said data files and comprising first data indicating at least one file attribute parameter having a user-defined name, and second data indicating a user-defined value of said at least one file attribute parameter, said file attribute parameter value representing an attribute of the content of the data file associated with said each node record; and

c.   identifying a first group of said data files wherein the contents of all data files of said first group have a common attribute represented by the values of file attribute parameters.

4.   The data file storage and retrieval method according to claim 3 further comprising the steps of:

d.   storing link records in said computer accessed data storage device, each link record comprising third data indicating a user-selected pair of said data files, fourth data indicating at least one link attribute parameter having a user-defined name, and fifth data indicating a user-defined value of said at least one link attribute parameter, said at least one link attribute parameter value representing an attribute of a relationship between said pair of data files indicated by said third data; and

e.   identifying a group of said link records each comprising fifth data indicating a common relationship attribute and each comprising third data indicating a pair of data files of said first group of data files identified in step c.

5.   A method for identifying related data files stored in a computer accessed data storage device, the method comprising the steps of:

storing link data characterizing relationships between pairs of said data files;

identifying a first of said data files; and

identifying a group of said stored data files wherein each data file of said group in combination with said first stored data file comprise a pair of data files having a common relationship characterized by said link data.

6. The method of claim 5 further comprising the steps of:

storing file attribute data characterizing an attribute of the content of each of the stored data files; and

identifying a subgroup of said group of data files wherein the content of each data file of the subgroup has a common attribute according to said file attribute data.

7. A method for locating files stored in a computer accessed data storage device comprising the steps of;

storing node records, each node record corresponding to one of said stored data files and comprising first data indicating at least one file attribute parameter, and second data indicating a value of said at least one file attribute parameter, said file attribute parameter value representing an attribute of the content of the data file corresponding to said node record;

storing link records, each link record comprising third data identifying a pair of said data files, fourth data indicating at least one link attribute parameter, and fifth data indicating a value of said at least one link attribute parameter, said link attribute parameter value representing an attribute of a relationship between the contents of said pair of data files identified by said third data;

obtaining from a user selection data identifying at least one user selected file attribute parameter value, identifying at least one user selected link attribute parameter value, and identifying a user selected one of said stored data files;

determining from said link records a first group of said stored data files wherein each data file of said first group is related to said user selected one data file by a relationship attribute indicated by said at least one user selected link attribute parameter value; and

determining from said node records a first subgroup of said first group of stored data files wherein the contents of all data files of said first subgroup have a common attribute represented by said user selected file attribute parameter value.

8. A method for storing and identifying successive versions of successively changed content of data files stored in a computer accessed data storage device, the method comprising the steps of:

creating and storing a version history record when the content of one of said data files undergoes a change, the version history record comprising a set of instructions for recreating a version of the content of said one data file existing immediately prior to the change by inserting data into and deleting data from the content of said one data file existing immediately following the change, one such version history record being created and stored each time a data file is changed such that a version history record is associated with each successive version of the content of a file;

assigning to each version history record a time parameter value established according to the time the file content version associated with the version history record was first stored as the content of a data file;

storing node records, each data file and each version history being associated with one of said node records, each said node record comprising first data indicating at least one file attribute parameter and second data indicating a value for said at least one file attribute parameter, said file attribute parameter value representing a file content attribute; and

identifying a first group of said node records wherein each record of said first group comprises data indicating a user selected file attribute parameter value and is associated with a version history record having an assigned time parameter value indicating the file content version associated with the version history record was stored in a file as of a user selected time.

9.   The method according to claim 8 further comprising the steps of:

changing a value of at least one file attribute parameter indicated by at least one node record from a first value to a second value; and

storing a record of said first value including data indicating when said at least one file attribute parameter had said first value.

10.   The method according to claim 8 further comprising the steps of:

storing link records, each link record comprising third data identifying a pair of node records according to said time parameter values, fourth data indicating at least one link attribute parameter, and fifth data indicating at least one link attribute parameter value for said at least one link attribute parameter, said at least one link attribute parameter value representing an attribute of a relationship between a pair of data file content versions associated with a pair of data files;

assigning to each link record a time parameter value established according to the time the link record was stored; and

identifying a group of said link records wherein each record of said group comprises fifth data indicating a user selected link attribute parameter value and has an assigned time parameter value indicating the link record was stored as of said user selected time.

11. The method according to claim 10 further comprising the steps of:

changing a value of at least one link attribute parameter indicated by at least one link record from a first value to a second value; and

storing a record of said first value including data indicating when said at least one link attribute parameter had said first value.

12. A method for storing and identifying successive versions of successively changed content of data files stored in a computer accessed data storage device, the method comprising the steps of:

creating and storing a version history record when the content of one of said data files undergoes a change, the version history record comprising a set of instructions for recreating a version of the content of said one data file existing immediately prior to the change by inserting data into and deleting data from the content of said one data file existing immediately after the change, one such version history record being created and stored each time the data file is changed such that a version history record is associated with each successive version of the content of a file;

assigning to each version history record a time parameter value established according to the time the file content version associated with the version history record was first stored as the content of a data file;

storing node records, each data file and each version history being associated with one of said node records, each said node record comprising first data indicating at least one file attribute parameter and second data indicating a value for said at least one file attribute parameter, said file attribute parameter value representing a file content attribute;

storing link records, each link record comprising third data identifying a pair of node records according to said time parameter values, fourth data indicating at least one link attribute parameter, and fifth data indicating a value for said at least one link attribute parameter, said link attribute parameter value representing an attribute of a relationship between a pair of data file content versions associated with a pair of data files;

assigning to each link record a time parameter value established according to the time the link record was stored; and

identifying a first group of said link records each comprising data indicating that the content of a user selected one of said stored data files as of a user selected time is related to the content of another of said stored data files as of said user selected time and according to a user selected link attribute parameter value.

13. The method of claim 12 further comprising the steps of:

identifying a group of node records indicated by said first group of link records; and

identifying a subgroup of the last mentioned group of node records wherein each record of said subgroup contains data indicating a user selected file attribute parameter value.

14. A data management method comprising the steps of:

transmitting data files to and retrieving data files from a computer accessed data storage device, said data files being stored therein and retrieved therefrom according to commands provided to a computer operating system adapted to control storage and retrieval of files in said computer accessed data storage device and to run user provided programs; and

transmitting a first user-defined character string to the computer operating system whenever at least one of said data files is retrieved, said first user-defined character string comprising an instruction for said computer operating system to initiate execution of a first user provided program stored in said computer accessed data storage device.

15. The data management method of claim 14 further comprising the step of transmitting a second user-defined character string to the computer operating system whenever the content of at least one of said data files is changed, said second user-defined character string comprising an instruction for said computer operating system to initiate execution of a second user provided program stored in said computer accessed data storage device.

16. The data management method according to claim 15 further comprising the step of maintaining a record of successive user-defined versions of said first character string, each successive version being identified according to the value of a time parameter, said value being established according to the time said each version was initially defined by a user.

17. A data file management apparatus comprising:

a computer accessed data storage device for storing data files; and

means responsive to user input for storing link attribute data relating pairs of said data files according to user-defined values of user-defined relationship attribute parameters, and for storing file attribute data characterizing the content of each of said data files according to user-defined values of user-defined file attribute
parameters.

18.    The data file management apparatus
according to claim 17 further comprising means for
perusing said file attribute data to identify
groups of said data files having contents
characterized by common file attribute parameter
values.

19.    A data file storage and retrieval
apparatus comprising:

a computer accessed data storage device
for storing data files;

first means responsive to user input for
storing node records in said computer accessed data
storage device, each node record being associated
with one of said data files and comprising first
data indicating at least one file attribute
parameter having a user-defined name, and second
data indicating a user-defined value of said at
least one file attribute parameter, said file
attribute parameter value representing an attribute
of the content of the data file associated with
said record; and

second means for perusing said node
records to identify a first group of said data
files wherein the contents of all data files of
said first group have a common attribute
represented by the value of a file attribute
parameter.

20.    The data file storage and retrieval
apparatus according to claim 19 wherein said first
means also stores link records in said computer accessed data storage device, each link record comprising third data indicating a user-selected pair of said data files, fourth data indicating at least one link attribute parameter having a user-defined name, and fifth data indicating a user-defined value of said at least one link attribute parameter, said at least one link attribute parameter value representing an attribute of a relationship between said pair of data files; and

wherein said second means also peruses said link records to identify a group of said link records each comprising fifth data indicating a common relationship attribute and each comprising third data indicating a pair of data files of said first group of data files.

21. An apparatus for identifying files stored in a computer accessed data storage device comprising:

means responsive to user input for storing node records, each node record corresponding to one of said stored data files and comprising first data indicating at least one file attribute parameter, and second data indicating a value of said at least one file attribute parameter, said file attribute parameter value representing an attribute of the content of the data file corresponding to said node record, and for also storing link records, each link record comprising third data identifying a pair of said data files, fourth data indicating at least one link attribute parameter, and fifth data indicating a value of said at least one link attribute parameter, said link attribute parameter value representing an attribute of a relationship between the contents of said pair of data files identified by said third data; and

means responsive to user input for perusing said link records to identify a first group of said stored data files wherein each data file of said first group is related to a user selected one data file by a relationship attribute indicated by at least one user-inputted link attribute parameter value, and for perusing said node records to identify a first subgroup of said first group of stored data files wherein the contents of data files of said first subgroup have a common attribute represented by a user-inputted data file parameter value.

22. An apparatus for storing and identifying successive versions of successively changed content of data files stored in a computer accessed data storage device, the apparatus comprising:

first means for creating and storing a version history record when the content of one of said data files undergoes a change, the version history record comprising a set of instructions for recreating a version of the content of said one data file existing immediately prior to the change by inserting data into and deleting data from the content of said one data file existing immediately following the change, one such version history record being created and stored each time the data file is changed such that a version history record is associated with each successive version of the content of a file, and for creating and storing node records, each data file and each version history being associated with one of said node records, each said node record comprising first data indicating at least one file attribute parameter and second data indicating a value for said at least one file attribute parameter, said file attribute parameter value representing a file content attribute, each node record being assigned a time parameter value established according to the time the file content version associated with the node record was first stored as the content of a data file; and

second means for identifying a first group of said node records wherein each node record of said first group comprises data indicating a user selected file attribute parameter value and having an assigned time parameter value indicating the file content version associated with the node record was stored in a file as of a user selected time.

23. The apparatus according to claim 22 further comprising:

third means for changing a value of at least one file attribute parameter indicated by at least one node record from a first value to a second value; and

fourth means for storing a file attribute parameter value record comprising data indicating said first value and indicating when said at least one file attribute parameter had said first value.

24. The apparatus according to claim 22 wherein said first means also creates and stores link records, each link record comprising third data identifying a pair of node records according to said time parameter values, fourth data indicating at least one link attribute parameter, and fifth data indicating at least one link attribute parameter value for said at least one link attribute parameter, said at least one link attribute parameter value representing an attribute of a relationship between a pair of data file content versions associated with a pair of data files.

25. An apparatus for storing and identifying successive versions of successively changed content of data files stored in a computer accessed data storage device, the apparatus comprising:

means for creating and storing a version history record when the content of one of said data files undergoes a change, the version history record comprising a set of instructions for recreating a version of the content of said one data file existing immediately prior to the change by inserting data into and deleting data from the content of said one data file existing immediately after the change, one such version history record being created and stored each time the data file is changed such that a version history record is associated with each successive version of the content of a file;

means for creating and storing node records, each data file and each version history being associated with one of said node records, each said node record comprising first data indicating at least one file attribute parameter and second data indicating a value for said at least one file attribute parameter, said file attribute parameter value representing a file content attribute;

means for creating and storing link records, each link record comprising third data identifying a pair of node records according to said time parameter values, fourth data indicating at least one link attribute parameter, and fifth data indicating a value for said at least one link attribute parameter, said link attribute parameter value representing an attribute of a relationship between a pair of data file content versions associated with said pair of data files;

each of said node records being assigned a time parameter value established according to the time the file content version associated with the node record was first stored as the content of a data file, and each said link record being assigned a time parameter value established according to the time the link record was stored; and

means responsive to user input for perusing said link records to identify a first group of said link records each comprising data indicating that the content of a user-selected one of said stored data files as of a user-inputted time is related to the content of another of said stored data files as of said user-inputted time according to a user-inputted link attribute parameter value.

26. A data file storage and retrieval apparatus comprising:

a computer accessed data storage device for storing data files;

means for transmitting data files to and retrieving data files from said computer accessed data storage device, said data files being stored therein and retrieved therefrom according to commands provided to a computer operating system adapted to control storage and retrieval of files in said computer accessed data storage device and adapted to execute user-provided programs; and

means for transmitting a first user-defined character string to the computer operating system whenever at least one of said data files is retrieved, said first user-defined character string comprising an instruction for said computer operating system to initiate execution of a user-provided program stored in said computer accessed data storage device.

FIG. I

FIG. 5

FIG. 2

# FIG.3

**ATTRIBUTE VALUE VERSION** — 36

| | |
|---|---|
| VALUE | 124 / 116 |
| PREVIOUS | |

**ATTRIBUTE NAME DICT.** — 32

| |
|---|
| STRINGINDEX |

**ENTITY ATTRIBUTE DICTIONARY** — 120

| |
|---|
| ATTRIBUTE/VALUE PAIRS |
| NEXT |

30

**ATTRIBUTE VALUE DICT.** — 34

| |
|---|
| PREVIOUS |
| CURRENT VALUE |
| ENTITY |

118

**NODE DICTIONARY**

| | |
|---|---|
| ATTRIBUTE/ VALUE PAIRS | NEXT |
| EVENT-ACTIONS | PREVIOUS |
| FIRSTINLINK | |
| FIRSTOUTLINK | |

110

24

**LINK DICTIONARY** — 26

| |
|---|
| NEXTOUTLINK |
| NEXTINLINK |

114

112

**DEMON VALUE VERSION** — 40

| |
|---|
| STRINGINDEX |
| PREVIOUS |

128

0229232

FIG. 4

| ATTRIBUTE VALUE VERSION | 36 |
| --- |
| |
| VALUE |
| PREVIOUS |
| |

| ATTRIBUTE NAME DICT. | 32 |
| --- |
| |
| STRINGINDEX |
| |

| ENTITY ATTRIBUTE DICTIONARY |
| --- |
| |
| ATTRIBUTE/VALUE PAIRS |
| NEXT |
| |

144
136
140
30

| ATTRIBUTE VALUE DICT. | 34 |
| --- |
| PREVIOUS |
| CURRENT VALUE |
| ENTITY |
| |

138

| LINK DICTIONARY | |
| --- | --- |
| | |
| ATTRIBUTE/ VALUE PAIRS | NEXT |
| PREVIOUS | |
| FROMNODE | |
| TONODE | |

130
26

| NODE DICTONARY | 24 |
| --- |
| |
| (TO NODE) |
| |
| (FROM NODE) |

132
134

| LINK VERSION | 28 |
| --- |
| |
| PREVIOUS |

146